# EUROPEAN PATENT SPECIFICATION

(11) **EP 2 977 242 B1**
(45) Date of publication and mention of the grant of the patent: **10.04.2019**
(21) Application number: 15175634.3
(22) Date of filing: 07.07.2015
(51) Int. Cl.: B60G 21/073

(54) **ISODIAMETRIC TRACTOR WITH MINIMUM MAINTENANCE**
ISODIAMETRISCHER SCHLEPPER MIT MINIMALER WARTUNG
TRACTEUR ISODIAMÉTRIQUE AVEC UN ENTRETIEN MINIMAL

(30) Priority: 24.07.2014 IT MI20141345
(43) Date of publication of application: 27.01.2016
(73) Proprietor: BCS S.p.A., 20123 Milano (MI) (IT)
(72) Inventor: BONCIANI, Riccardo, 20081 ABBIATEGRASSO (IT)
(74) Representative: Giuli, Maurizio Mario Galdino

(56) References cited:
- WO-A1-99/41096
- WO-A1-2013/005007
- DE-A1-102012 201 345
- US-A- 4 236 591
- US-A- 5 180 028

## Description

The present invention relates to an isodiametric tractor with minimum maintenance.

As is known, tractors of the traditional type became widespread in Europe after the First World War. They are considerably heavy and large-sized vehicles, characterized by rear wheels which are much larger than the front wheels due to the fact that these tractors were designed for towing (ploughs, trailers, etc.). The towing force is mainly exerted by the rear wheels and to a very small extent by the front wheels, it improves, moreover, with an increase in the mass of the tractor. When first conceived, traditional tractors were substantially inspired by the geometry of the ox, a towing animal *par excellence,* which combines its two massive and sturdy hind legs (pulling legs) with two slender and lean front legs (directional legs).

After the Second World War, traditional tractors evolved with the addition of a rear and subsequently also front power-take, thus also extending their use to motorized tools, but their geometry remained unvaried, as towing operations remained the fundamental applications.

After the Second World War, a new type of tractor began to become widespread in Europe, not designed for towing but for working in confined spaces such as, for example, greenhouses, the narrow rows of vineyards, the low nets of orchards. A vehicle was therefore required, which, with the same power as a traditional tractor, was, however, much smaller, lower and narrower than its older brother. Isodiametric tractors were conceived, thus named according to one of their most visible features, i.e. four identical wheels. In Greek, iso means equal, isodiametric: wheels having the same diameter.

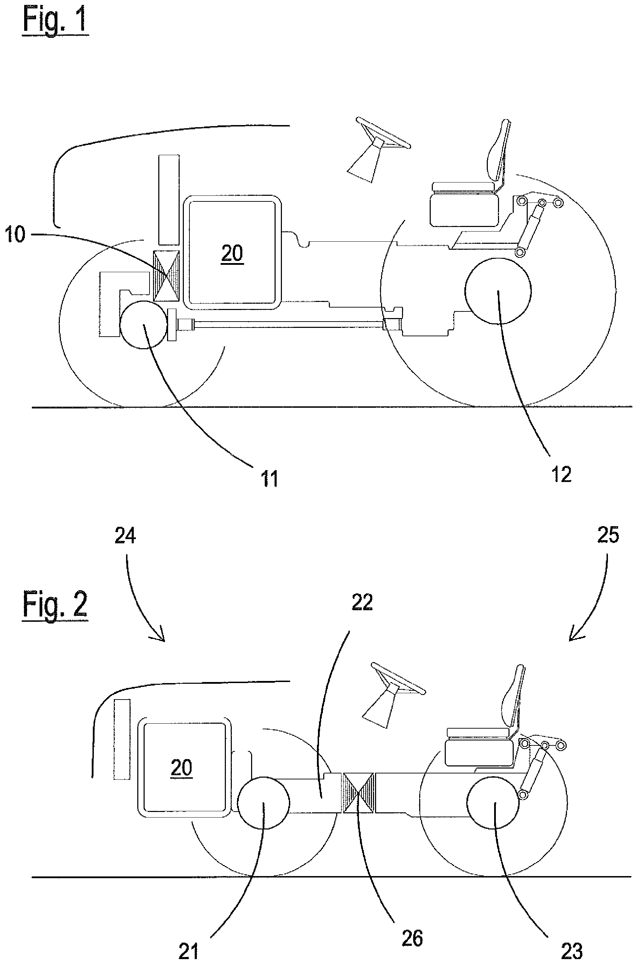

As can be seen in figures 1 and 2, the first relating to a traditional tractor and the second to an isodiametric tractor, in order to lower a traditional tractor, it is necessary to work on its two main encumbrances: the rear wheels which must be reduced and the motor with the transmission that must be lowered. The final result is the isodiametric tractor of figure 2. It should be noted that the rear wheels have become smaller and identical to the front wheels, whereas the motor has been moved in front of the front axis and is cantilever-flanged with respect to this.

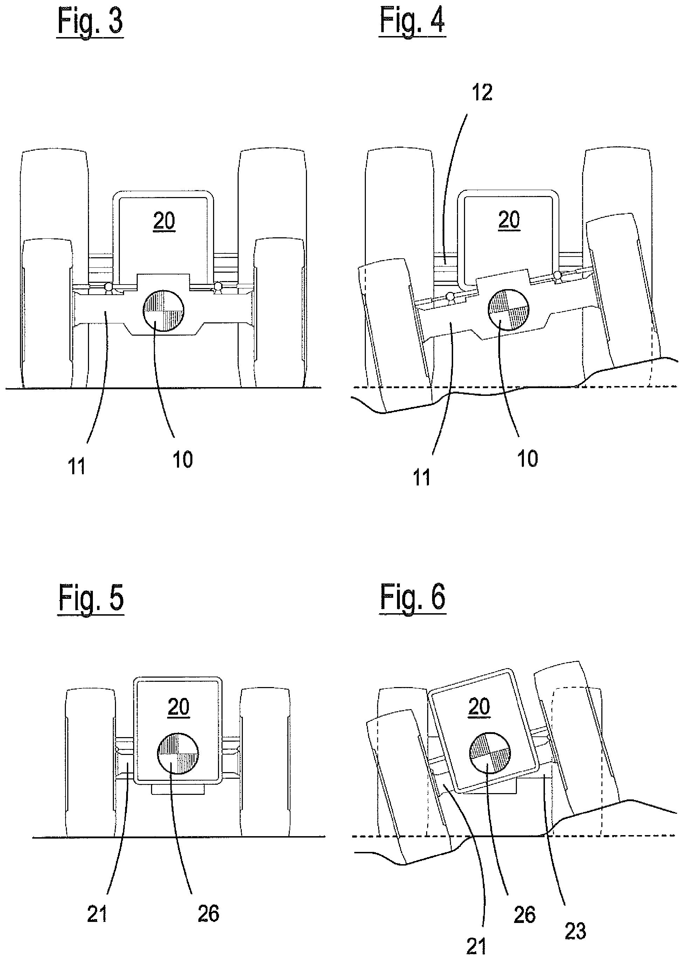

One of the main drawbacks of isodiametric tractors with respect to traditional tractors is that, in order to rest all four wheels on the ground, a traditional tractor is equipped with a swinging or oscillating hinge 10 positioned in the centre of the front axle 11 as can be seen in figures 3 and 4. This hinge 10 allows the front axle 11 to oscillate (or swing) with respect to a longitudinal axis, i.e. with respect to the rear axle 12 of the same tractor. Consequently, in a traditional tractor, the whole structure is rigid except for the front axle 11 alone, which is connected to the structure by means of a hinge 10. When observing a conventional tractor while it is working in the fields, it can be seen that the vehicle is substantially rigid while the front axle alone continues to oscillate around the hinge. This is extremely important, as it allows the front axle 11 to adapt itself to the ground (figure 4), therefore enabling the tractor to always have all four wheels adhering to the ground. While working, this hinge is not subjected to particular stress as only vertical shear forces are exerted on it, due to the weight of the overlying structure.

Adapting an isodiametric tractor to the ground is much more complex and creates various problems which have so far not been solved. In the isodiametric tractor (figures 2, 5 and 6), the motor 20 is integral with the transmission which comprises: a front axle 21, an intermediate transmission 22 and a rear axle 23. In order to allow all four wheels to be adapted to the ground, the tractor must be divided into two parts oscillating with respect to each other (figure 2).

There is therefore a front part 24 which comprises the motor 20, the front axle 21 and a part of the transmission 22 and a rear part 25 which comprises the gearbox and rear axle 23. The two parts are connected to each other by a hinge 26 positioned in a longitudinal direction (figure 2) which allows the two axles 21, 23 to oscillate with respect to each other, guaranteeing the adherence of the four wheels to the ground (figure 6). Extremely high forces and torques are exerted on this hinge 26, which acts as oscillating or rolling hinge, contrary to the case of conventional tractors. When the isodiametric tractor is operating, the two halves (front part 24 and rear part 25) are held together only by this hinge 26 which, for reasons of encumbrance, has relatively limited dimensions. Extremely high reaction torques are exerted on this, due to the weight of the tools assembled on the tractor both in front and behind, whereas the two axles 21, 23 oscillate continuously with respect to each other. This creates wear which does not allow the vehicle to exceed 800/1000 working hours without having to resort to extraordinary maintenance with the substitution of the hinge. Said maintenance is extremely costly as it must be carried out in a specialized workshop, the vehicle must be dismantled and opened into two parts with consequent lengthy stoppage times.

A second problem relates to the stability of the vehicle when it is moving and the comfort of the operator. Whereas, in fact, in a traditional tractor only the front axle 10 oscillates, i.e. a negligible mass with respect to the whole mass of the tractor, in the case of an isodiametric tractor, it is the whole front half 24 which oscillates (figures 2 and 6) which is equal to over half of the total mass of the tractor. This creates instability of the vehicle and disturbing vibrations which reduce the comfort of the operator.

It should also be considered that there are mainly two types of isodiametric tractors, both in any case with a hinge 26, positioned in a longitudinal direction (figure 2), which allows the two axles to oscillate with respect to each other.

A first type of isodiametric tractor comprises two steering wheels, those of the front axle, so as to allow the tractor to change direction with excellent turning radiuses.

A second type of isodiametric tractor, with central articulation, has both axles with fixed wheels and is equipped with a further central joint having a vertical axis, also called steering joint, which allows steering.

Another disadvantage of the presence of the oscillation joint in isodiametric tractors relates to the arrangement and adaption of the auxiliary systems of the tractor, among which, for example, the electric plant and hydraulic plant.

The tubes of the hydraulic plant and/or wires of the electric plant that must connect the devices situated on the rear portion with those on the front portion of the chassis, must in fact be designed taking into account the reciprocal movements of these two portions of the chassis, requiring the use of solutions which are complicated, costly, difficult to assemble and, in some cases, not optimum for the specific functions of these plants.

EP 2 329 968 discloses a tractor of the traditional type, in which the front wheels, having a reduced diameter with respect to the rear wheels, are made drive wheels by means of a front differential which is driven by a motor positioned in the centre of the chassis. Two parallelogram suspensions are also envisaged at the opposite sides of the chassis, each carrying one of the front drive wheels that can be steered.

The differential casing is cantilever-applied to the chassis in front of the motor which is positioned in the centre of the chassis, and the two wheels are also applied in a front position with respect to the motor. This construction is not of the type of interest to the field of application of this invention as the tractor is not isodiametric and the chassis is not composed of two parts articulated by a swing or roll joint described above positioned between the two parts of the chassis.

US 4236591 A also shows a tractor according to the preamble of claim 1.

In the light of what is specified above, an objective of the present invention is to provide an isodiametric tractor which can effectively solve the whole series of drawbacks listed above.

A further objective of the present invention is to achieve the above-mentioned objective with a simple, rational and low-cost solution.

Another main objective is to avoid all problems of wear, maintenance and dismantling with correlated costs deriving from the presence of the known swing or roll joint.

Yet another objective of the present invention is to be able to have an extremely simplified and immediate implementation, with immediate interventions and particularly simplified and effective constructions.

These and other objectives are achieved thanks to the characteristics of the invention specified in the independent claim 1.

The dependent claims outline preferred and/or particularly advantageous aspects of the invention.

Thanks to the solution according to the present invention, the wheels of the axle can move in a vertical direction so that they can effectively adapt themselves to the irregularity of the ground, without requiring any oscillation of the front portion with respect to the rear portion of the chassis, which can therefore be produced as a single component in which the front and rear parts are rigidly integral with each other, eliminating any known swing or roll joint.

During these adaptation phases, the only masses in movement are only the wheels and the components that connect the wheels to the chassis. Consequently, the barycentre of the tractor always remains vertically aligned with the axis of the chassis, so that the inertial forces are so low as to not cause any significant shaking or vibrations.

This reduction in the shaking and vibrations leads to an increase in the stability and drivability of the tractor, which is therefore easier to manoeuvre also at relatively fast speeds.

The auxiliary plants, among which the hydraulic and electric plants, can be simplified and rationalized, as also the driving position and dashboard, which can be dimensioned without any particular restrictions and therefore with more space available.

The solution outlined above does not require any extension of the wheelbase of the tractor, or forward displacement of the axle with the driving wheels, maintaining the longitudinal dimensions of the machine, essential for its manoeuvrability required by specific uses, intact.

Further characteristics and advantages of the invention will appear evident from the following description provided for illustrative and non-limiting purposes, with the help of the figures of the enclosed drawings.
Figures 1 and 2 show raised schematic side views of a traditional tractor and a usual isodiametric tractor, respectively;
Figures 3 and 4 show schematic front views of the traditional tractor of figure 1 in two different operative positions;
Figures 5 and 6 show schematic front views of the usual known isodiametric tractor of figure 2 in two different operative positions;
Figures 7 and 8 are schematic front views of a first embodiment of an isodiametric tractor according to the present invention in two different operative positions;
Figures 9 and 10 are schematic front views of a second embodiment of an isodiametric tractor according to the present invention in two different operative positions;
Figures 11 and 12 are schematic plan views from above of the first embodiment of the tractor of figures 7 and 8 with a rigid chassis, equipped with steering wheels aligned and steered, respectively;
Figures 13 and 14 are schematic plan views from above of the first embodiment of the tractor of figures 7 and 8 with a chassis having central articulation, in a position with aligned wheels and with a steered front portion of chassis, respectively;
Figures 15 and 16 are schematic plan views from above of the second embodiment of the tractor of figures 9 and 10 with a rigid chassis, equipped with steering wheels aligned and steered, respectively;
Figures 17 and 18 are schematic plan views from above of the second embodiment of the tractor of figures 9 and 10 with a chassis having central articulation, in a position with aligned wheels and with a steered front portion of chassis, respectively.

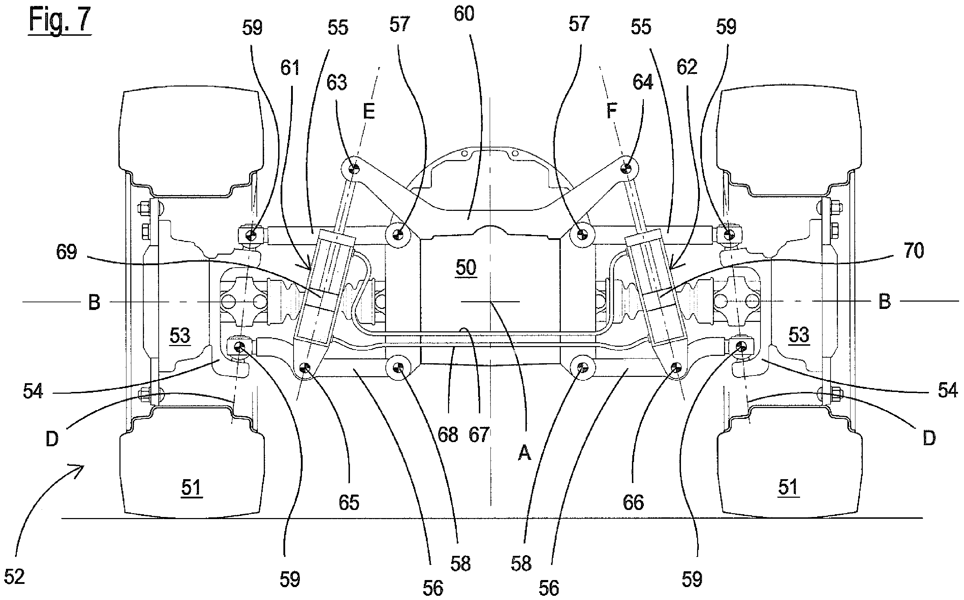

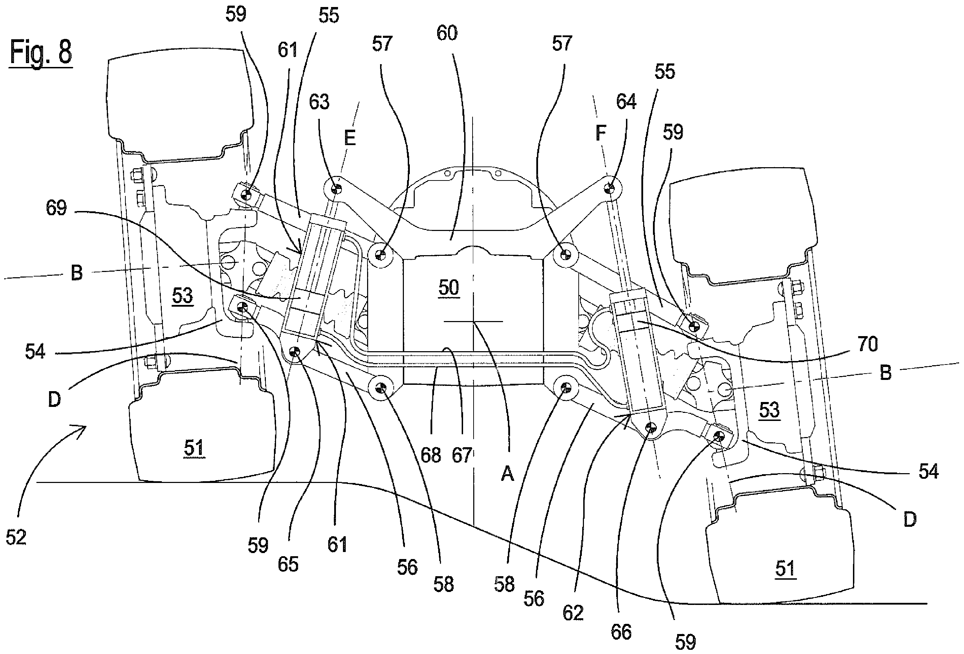

With reference first of all to figures 7 and 8, these illustrate a schematic view of a first embodiment of an isodiametric tractor with minimum maintenance according to the present invention.

As already indicated, this type of isodiametric tractor is particularly suitable and used in gardening and/or agricultural activities that must be carried out in reduced spaces, for example in specialized active agriculture in crops in vineyards, orchards, greenhouses, nurseries, micro-rows and poultry farming.

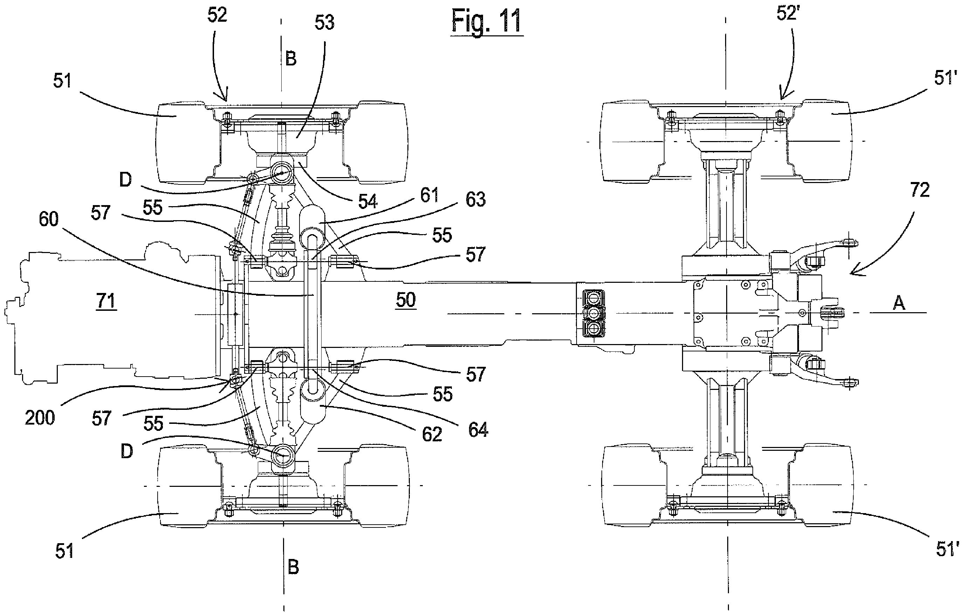

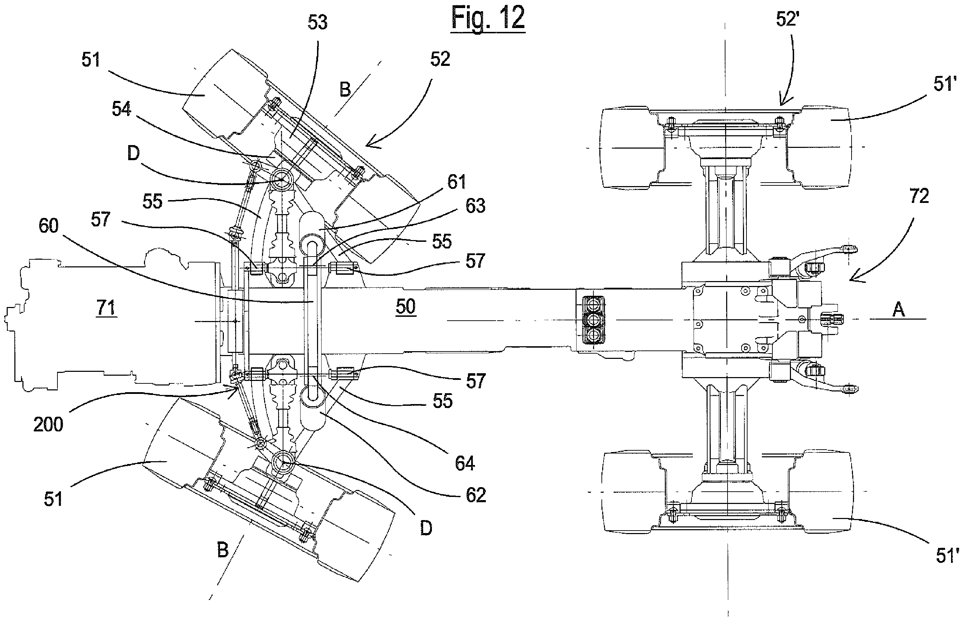

Figures 7 and 8 illustrate how, in an isodiametric tractor according to the invention in a first embodiment, there is a rigid chassis 50 (figures 11 and 12) with front steering wheels 51 forming part of a front axle 52.

The supporting chassis 50 can in fact be defined in a first example by a rigid spar which develops along a longitudinal axis A positioned horizontally.

Motorization means (not shown and removed from figures 7 and 8, but evident in a cantilevered motor 71 in figures 11, 12) are cantilever-sustained in front of the front end part of the chassis 50, and traction means (not shown) suitable for allowing the motor to move the tractor forward on the ground, are also envisaged. Said figures 11 and 12 also show the presence of a steering system 200 of the wheels 51 of the front axle 52, of the usual type, not described.

The chassis 50 is suitable for carrying a tool (not shown) for working the land, which is normally of the mechanical or hydraulic type, fixed in the rear part of the chassis 50, on a normal three-point lifter indicated in 72.

The traction means comprise four wheels, in opposing pairs (of which the front wheels 51 are shown), respectively associated with a front axle 52 and the rear wheels 51' with a rear axle 52'.

As illustrated in figures 7 and 8, each of the wheels 51 of the front axle 52 is carried by a hub 53, which is rotatingly coupled with a support 54, so that the wheel 51 can rotate around its rotation axis B horizontal and orthogonal to the longitudinal axis A of the chassis 50.

The support 54 of each wheel 51 is connected to the chassis 50 by means of two rockers, of which an upper rocker 55 and a lower rocker 56. Both rockers 55 and 56 have a first end articulated in 57 and 58 with respect to the chassis 50, so as to be able to oscillate around an axis parallel to the longitudinal axis A, and a second end articulately connected to the support 54, so that the rocker 55, 56 and the support 54 can reciprocally oscillate at least around a further axis, also parallel to the longitudinal axis A of the chassis 50.

In this way, the rockers 55 and 56, together with the chassis 50 and the support 54 define a wishbone kinematic group which allows the wheel 51 to make vertical movements with respect to the chassis 50.

In particular, in this example, the support 54 of each hub 53 is articulately connected to the rockers 55, 56 by means of ball joints 59 which allow the hub to rotate around an axis D, to allow the wheel to be steered.

In particular, the wishbone comprising the rockers 55 and 56 is substantially configured as an articulated parallelogram, so that in vertical movements with respect to the chassis 50, the wheel 51 remains parallel to itself, i.e. so that the rotation axis B always remains almost substantially horizontal, as clearly illustrated in figure 8 with respect to the rest position of figure 7.

It should be pointed out that, even if the rockers 55 and 56 can be assimilated to rods, each of them is preferably shaped like a fork (as can be seen in the plan representation) which is articulated to the chassis 50 in two points, whereas it is articulated to the support 54 of the wheel 51 in correspondence with its vertex.

The wishbones of the front axle 52 according to the present invention are reciprocally connected to the chassis and wheels in the following way.

In particular, it can be observed that an upper bar 60 is fixed in the centre-line to the upper part of the chassis 50. In particular, in the conformation shown, said upper bar 60 has an open U-shaped form, so as to be able to constrain on each part, a first end of a hydraulic cylinder 61 and 62 respectively, fixed to it by means of respective end pivots 63, 64.

A second end of each hydraulic cylinder 61, 62 is articulately constrained with a relative pivot 65, 66 to the respective lower rocker 56. Furthermore, the two hydraulic cylinders 61, 62 have connection pipes 67, 68. The first pipe 67 connects an upper chamber of one cylinder 61 with an upper chamber of the other cylinder 62, whereas a second pipe 68 connects a lower chamber of one cylinder 61 with a lower chamber of the other cylinder 62. The upper and lower chambers of each of the two cylinders 61, 62 have a variable volume, mutually opposite with respect to an intermediate piston 69, 70. This variability in the volume of a chamber of a cylinder depends directly on that of the volume of the other hydraulic cylinder connected to it. In a rest position, with the wheels on the same ground level, in a preferred embodiment, the upper and lower chambers have almost the same volume.

In this way, as is clearly illustrated in figure 8, when a wheel is lowered due to a variation in the supporting ground, the above-mentioned connection between the two cylinders 61 and 62 is such that an upper chamber of one cylinder 61 receives (amplifying in volume) the fluid contained in the upper chamber of the other cylinder 62, which is reduced in volume, and viceversa for the lower chambers of the two cylinders 61, 62.

In this way, in its vertical movements with respect to the chassis 50, the wheel remains substantially parallel to itself, i.e. with a minimum variation in the tilt, so that the rotation axis B always remains almost substantially horizontal, as clearly illustrated in figure 8.

Said figure 8 also clearly illustrates in the sections of the two cylinders 61, 62, the movements of the fluid inside their chambers.

It can also be seen how the two cylinders 61 and 62, which are positioned according to a pair of sloping axes E and F respectively converging with each other in the upper part, maintain a substantially similar configuration in the passage from the rest position of figure 7 to the operating position of figure 8. The axes E and F translate laterally maintaining almost the same inclination. This shows how each hydraulic cylinder 61, 62 is positioned with its axis in a substantially vertical plane.

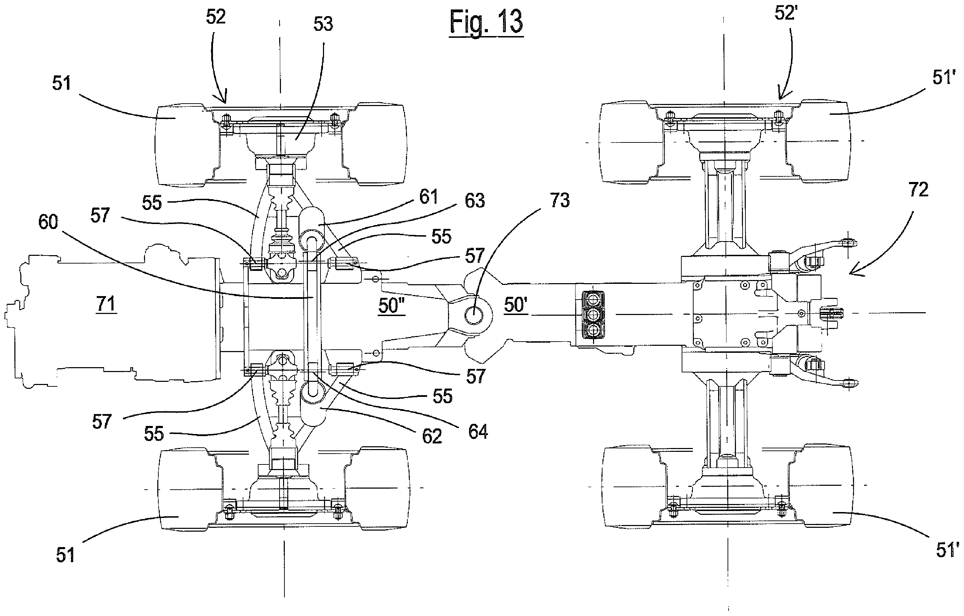

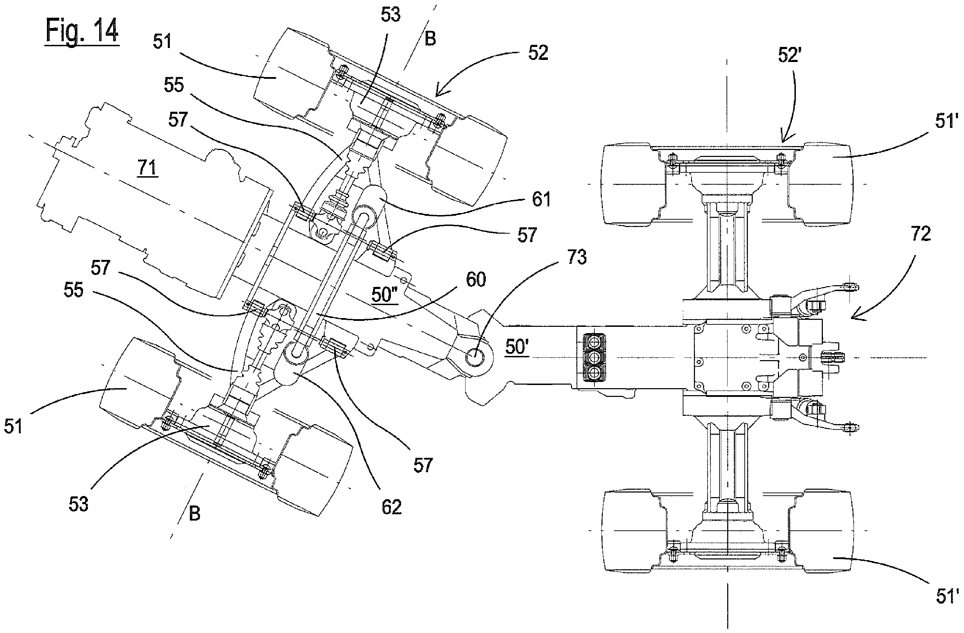

As already mentioned, figures 13 and 14 are schematic plan views from above of a further arrangement of the first embodiment of the tractor of figures 7 and 8, but with a chassis in two portions 50' and 50" with a central articulation in 73.

This is an alternative solution in which the same elements are indicated with the same reference numbers. In this solution therefore, the front axle 52 does not envisage the steering system.

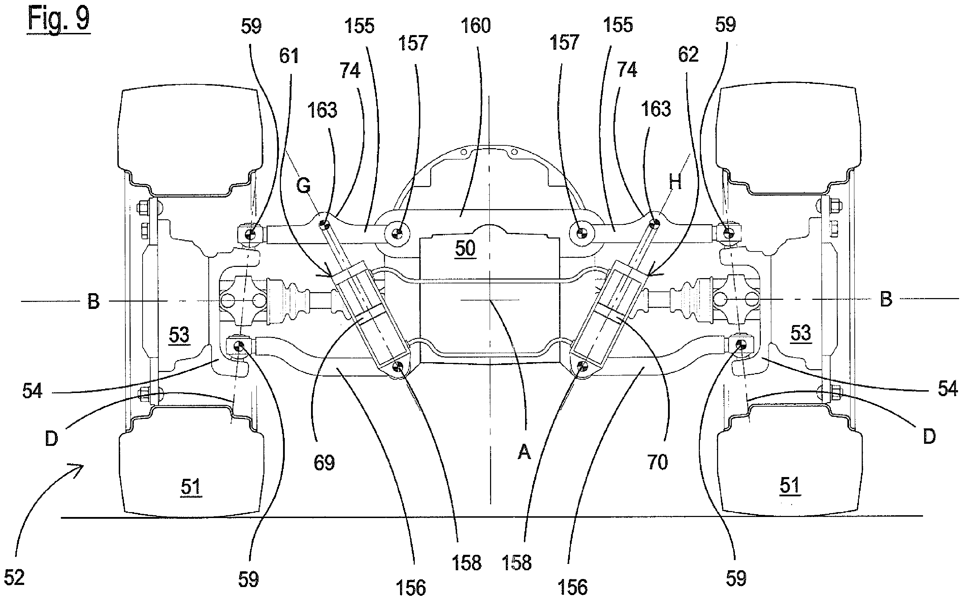

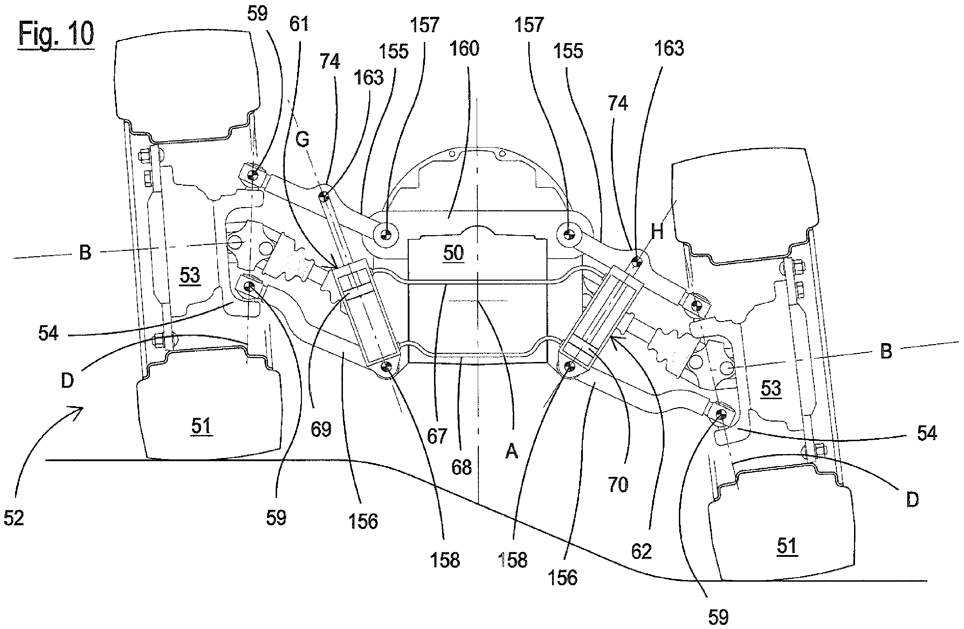

With respect now to figures 9 and 10, these illustrate a second embodiment of an isodiametric tractor applying the characteristics of the present invention.

For the sake of simplicity, when possible, the same reference numbers will be used for equivalent elements also in these further exemplifications.

Consequently, also in this case, a front axle 52 is represented, with wheels 51. Furthermore, as illustrated in figures 9 and 10, each of the wheels 51 of the front axle 52 is carried by a hub 53, which is rotatingly coupled with a support 54, so that each wheel 51 can rotate around its rotation axis B horizontal and orthogonal to the longitudinal axis A of the chassis 50.

For each additional connection, reference should be made to the first embodiment.

Also in this case, the support 54 of each wheel 51 is connected to the chassis 50 by means of two rockers, of which an upper rocker 155 and a lower rocker 156. Both rockers 155 and 156 have a first end articulated in 157 and 158 with respect to the chassis 50, so as to be able to oscillate around an axis parallel to the longitudinal axis A, and a second end articulately connected with the support 54, so that the rocker 155, 156 and the support 54 can oscillate reciprocally at least around a further axis, also parallel to the longitudinal axis A of the chassis 50.

Also in this case, the rockers 155 and 156, together with the chassis 50 and the support 54, define a wishbone kinematic group which allows the wheel 51 to make vertical movements with respect to the chassis 50. Also in this example, the support 54 of each hub 53 is articulately connected to the rockers 155, 156 for example by means of ball joints 59 which allow the hub to rotate around an axis D, to allow the wheel to be steered.

In particular, the wishbone comprising the rockers 155 and 156 is substantially configured as an articulated parallelogram, so that in vertical movements with respect to the chassis 50, the wheel 51 remains parallel to itself, i.e. so that the rotation axis B always remains substantially horizontal, as clearly illustrated in figure 10 with respect to the rest position shown in the previous figure 9.

Also in this case, naturally, it should be pointed out that, even if the rockers 155 and 156 can be assimilated to rods, each of them is preferably shaped like a fork, which is articulated to the chassis 50 in two points, whereas it is articulated to the support 54 of the wheel 51 in correspondence with its vertex.

In this case, the wishbones of the front axle 52 according to the present invention, are connected to the chassis in an upper position by means of a bracket 160 which extends from the chassis 50.

According to the present invention, also this embodiment envisages a hydraulic cylinder 61 and a hydraulic cylinder 62, respectively.

Said hydraulic cylinders 61 and 62 are hinged at a first end to the chassis 50 in the same lower pivots 158 as the lower rockers 156 or in close proximity to these (not shown). Said cylinders 61 and 62 are hinged at a second end by means of pins 163 in extensions 74 of the upper rockers 155.

Furthermore, as illustrated for the previous embodiment, the two hydraulic cylinders 61, 62 have connection pipes 67, 68. The first pipe 67 connects an upper chamber of one cylinder 61 with an upper chamber of the other cylinder 62, whereas the second pipe 68 connects a lower chamber of one cylinder 61 with a lower chamber of the other cylinder 62. The upper and lower chambers of each of the two cylinders 61, 62 have a variable volume, opposite with respect to an intermediate piston 69, 70. This variability in the volume of a chamber of a cylinder depends directly on that of the volume of the other hydraulic cylinder connected to it. In a rest position, with the wheels on the same ground level, in a preferred embodiment, the upper and lower chambers have almost the same volume.

In this way, as is clearly illustrated in figure 10, when a wheel is lowered due to a variation in the supporting ground, the above-mentioned connection between the two cylinders 61 and 62 is such that an upper chamber of one cylinder 61 receives (amplifying in volume) the fluid contained in the upper chamber of the other cylinder 62, which is reduced in volume, and viceversa for the lower chambers of the two cylinders 61, 62.

In this way, in its vertical movements with respect to the chassis 50, the wheel remains substantially parallel to itself, i.e. with a minimum variation in the tilt, so that the rotation axis B always remains almost substantially horizontal, as clearly illustrated in figure 10. Said figure 10 also clearly illustrates in the sections of the two cylinders 61, 62, the movements of the fluid inside their chambers.

It can also be seen how the two cylinders 61 and 62 are positioned according to a pair of sloping axes E and F respectively diverging with each other in the upper part.

Said axes substantially maintain their position in the passage from the rest position of figure 9 to the operative position of figure 10. It can also be seen how each hydraulic cylinder 61, 62 is positioned with its axis on a substantially vertical plane.

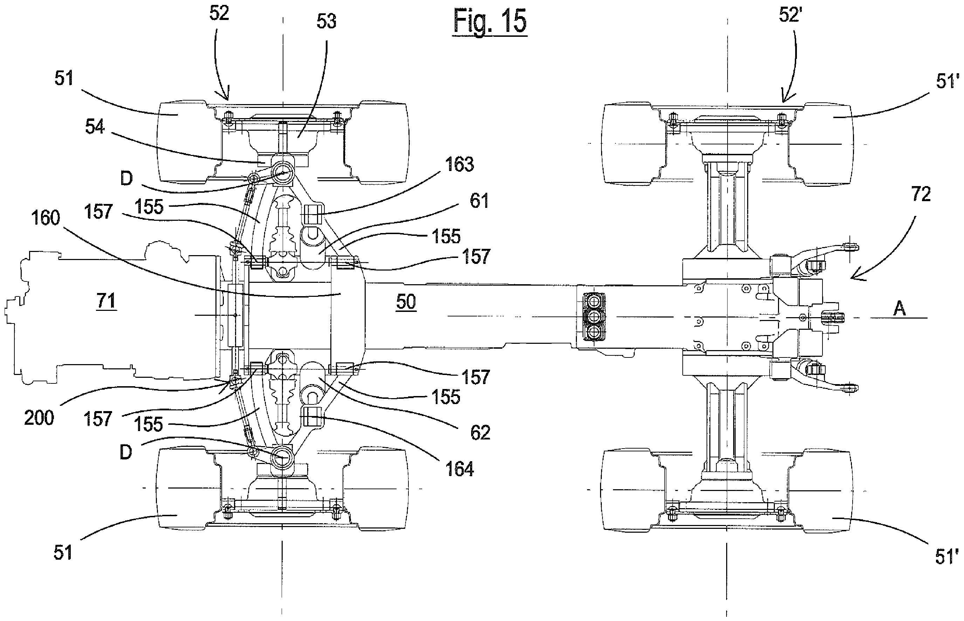

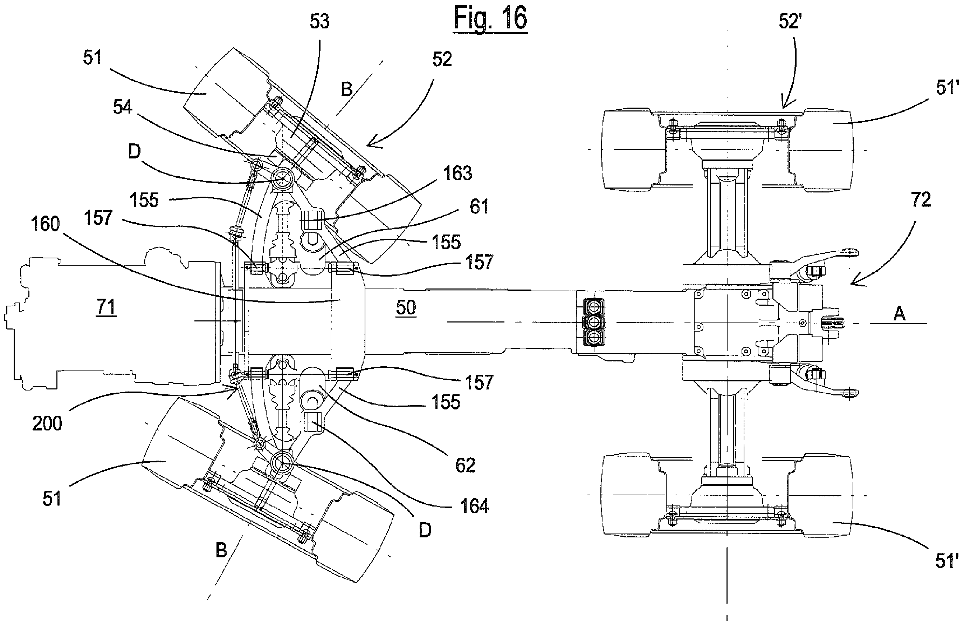

This embodiment envisages a rigid chassis 50 (figures 15 and 16) with front steering wheels 51 forming part of a front axle 52. The presence of a steering system 200 of the wheels 51 of the front axle 52, of the usual type and not described, can also be observed.

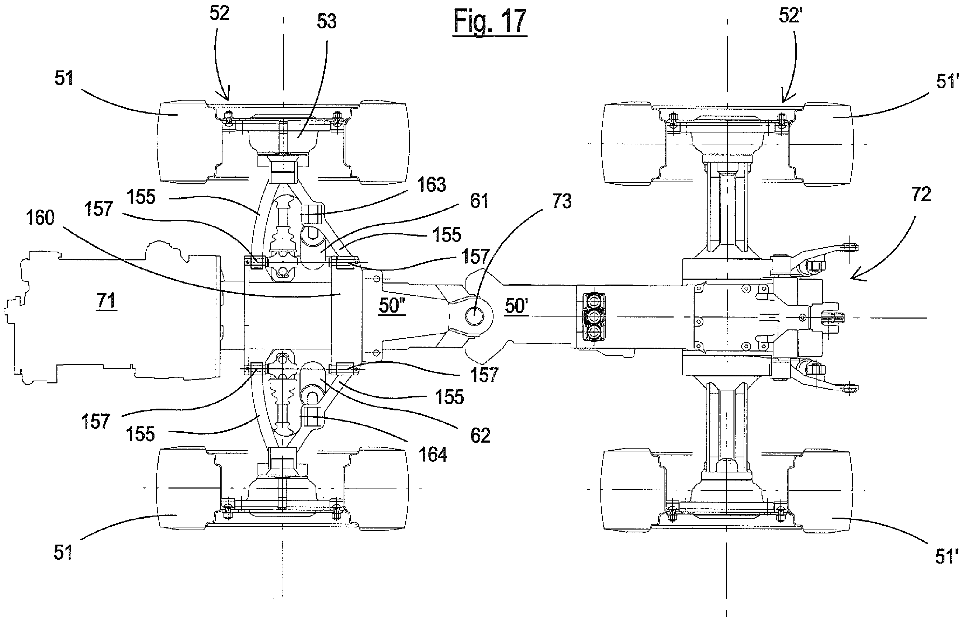

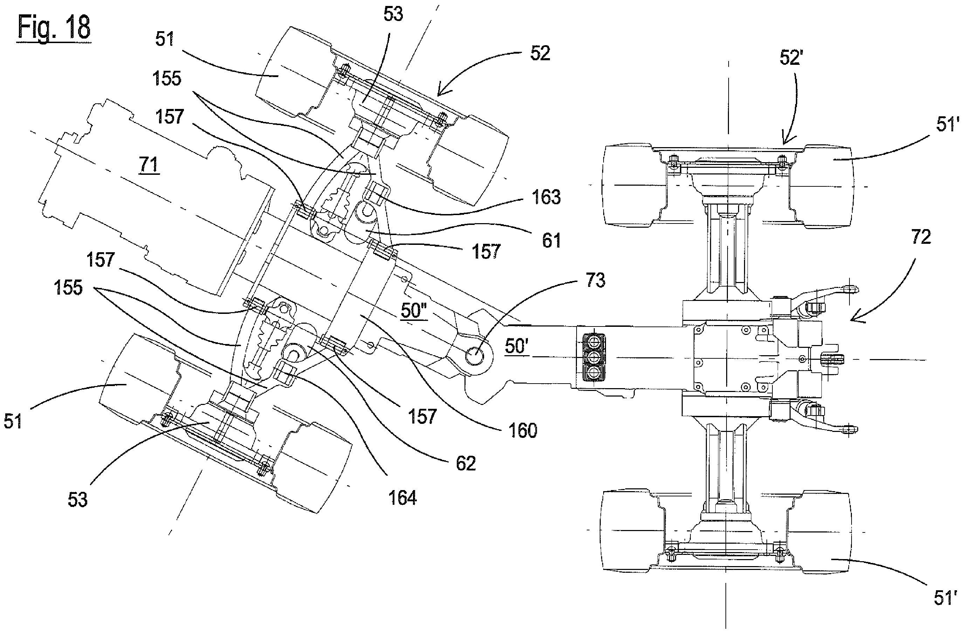

As already indicated, figures 17 and 18 are schematic plan views from above of a further arrangement of the second embodiment of the tractor of figures 9 and 10, but with a chassis in two portions 50' and 50" with central articulation in 73.

This is an alternative solution in which the same elements are indicated with the same reference numbers. In this solution therefore the front axle 52 does not envisage the steering system.

It should be pointed out that the horizontal and vertical orientations previously defined are provided with reference to the tractor resting on a flat and horizontal ground. The front and rear indications are supplied with reference to the forward driving direction of the tractor. An expert in the field can obviously effect numerous modifications of a technical applicative nature to the tractor described above, all included in the protection scope of the invention as claimed hereunder.

In particular, although reference has always been made to the front axle alone, the wishbone kinematic system described above can be applied to both axles, or possibly only to the rear axle, leaving the front axle fixed.

It can therefore be seen how, thanks to the solution of the present invention which eliminates the roll or swing joint, stress and components which are harmful to the tractor are thus avoided, there is a reduction in encumbrances with fewer design restrictions relating to the characteristics of the driving position, in particular with respect to the dimensioning of the dashboard and arrangement of the commands.

A further advantage of the present solution consists in the considerable construction simplification of a tractor of this kind, eliminating or minimizing maintenance, repair and substitution interventions, with a reduction in machine stoppages and relative costs.

The elimination of the known roll and swing joint simplifies the arrangement of the auxiliary systems of the tractor, among which, for example, the electric plant and hydraulic plant.

This is because the tubes of the hydraulic plant and/or wires of the electric plant do not have to be designed taking into account the reciprocal movements of these two portions of the chassis, thus providing simple, inexpensive solutions which can be easily assembled and are particularly functional.

The presence of hydraulic cylinders thus arranged guarantees an easier and more immediate use of the tractor, considerably facilitating the driving operations on the part of the operator.

The objective mentioned in the preamble of the description has therefore been achieved.

The protection scope of the invention is therefore defined by the enclosed claims.

## Claims

1. An isodiametric tractor with minimum maintenance comprising a chassis (50; 50', 50") carrying a front axle (52) and a rear axle (52') for pairs of front wheels (51) and rear wheels (51'), wherein two front wheels (51) are driving wheels and are actuated by a motor (71) with the interpositioning of a differential and wherein transmission means for transmitting motion from the motor (71) to the wheels (51) are entirely contained in the chassis, wherein each wheel (51) of the front axle (52) is also connected to the chassis (50; 50', 50") and/or to a differential casing by a respective articulated kinematic group, wherein said motor (71) is cantilever-fixed to a front end of the chassis (50; 50', 50"), **characterized in that** each articulated kinematic group of each wheel (51) of the front axle (52) is associated with a hydraulic cylinder (61, 62), associated by means of a pin (63, 64; 158) with a portion of said chassis (50; 50', 50") and at the other end, with a portion (56; 155) of said articulated kinematic group, wherein each hydraulic cylinder (61, 62) comprises two chambers having a variable volume, opposite with respect to an intermediate piston (69, 70), wherein an upper chamber of one cylinder (61) is connected (in 67) to an upper chamber of the other cylinder (62) and a lower chamber of one cylinder (61) is connected (in 68) to a lower chamber of the other cylinder (62), wherein said articulated kinematic group comprises an upper rocker (55; 155) and a lower rocker (56; 156) positioned between said chassis (50; 50") and each support (54) of said front wheel (51).

2. The tractor according to claim 1, **characterized in that** each hydraulic cylinder (61, 62) is positioned with the axis on a substantially vertical plane.

3. The tractor according to claim 1, **characterized in that** said hydraulic cylinders (61, 62) are positioned between an extension of said chassis (50; 50', 50") and one of said rockers (56; 155).

4. The tractor according to claim 3, **characterized in that** said hydraulic cylinders (61, 62) are positioned between an upper extension (60) of said chassis (50; 50', 50") and a hinging (65, 66) of a lower rocker (56).

5. The tractor according to claim 3, **characterized in that** said hydraulic cylinders (61, 62) are positioned between an extension (74, 163) of an upper rocker (155) and a lower portion of said chassis (50; 50', 50").

6. The tractor according to one or more of the previous claims, **characterized in that** said chassis is rigid (50) and comprises a rigid spar which develops along a longitudinal axis (a) positioned horizontally.

7. The tractor according to one or more of the previous claims from 1 to 5, **characterized in that** said chassis is in two portions (50') and (50") with central articulation (73).

## Patentansprüche

1. Isodiametrischer Traktor mit minimaler Wartung, umfassend ein Fahrgestell (50; 50', 50"), das eine Vorderachse (52) und eine Hinterachse (52') für Paare von Vorderrädern (51) und Hinterrädern (51') trägt, wobei zwei Vorderräder (51) Antriebsräder sind und von einem Motor (71) unter Zwischenschaltung eines Differentials betätigt werden und wobei ein Getriebemittel zur Übertragung einer Bewegung vom Motor (71) auf die Räder (51) vollständig in dem Fahrgestell enthalten ist, wobei jedes Rad (51) der Vorderachse (52) auch mit dem Fahrgestell (50; 50', 50") und/oder mit einem Differentialgehäuse durch eine jeweilige gelenkige kinematische Gruppe verbunden ist, wobei der Motor (71) an einem vorderen Ende des Fahrgestells (50; 50', 50") freitragend befestigt ist, **dadurch gekennzeichnet, dass** jede gelenkige kinematische Gruppe jedes Rades (51) der Vorderachse (52) einem Hydraulikzylinder (61, 62) zugeordnet ist, der mittels eines Stifts (63, 64; 158) einem Abschnitt des Fahrgestells (50; 50', 50") und am anderen Ende einem Abschnitt (56; 155) der gelenkigen kinematischen Gruppe zugeordnet ist, wobei jeder Hydraulikzylinder (61, 62) zwei Kammern mit veränderlichem Volumen gegenüberliegend einem Zwischenkolben (69, 70) umfasst, wobei eine obere Kammer eines Zylinders (61) (in 67) mit einer oberen Kammer des anderen Zylinders (62) und eine untere Kammer eines Zylinders (61) (in 68) mit einer unteren Kammer des anderen Zylinders (62) verbunden ist, wobei die gelenkige kinematische Gruppe eine obere Kippvorrichtung (55; 155) und eine untere Kippvorrichtung (56; 156) umfasst, die zwischen dem Fahrgestell (50; 50") und jedem Träger (54) des Vorderrades (51) angeordnet ist.

2. Traktor nach Anspruch 1, **dadurch gekennzeichnet, dass** jeder Hydraulikzylinder (61, 62) mit der Achse in einer im Wesentlichen vertikalen Ebene positioniert ist.

3. Traktor nach Anspruch 1, **dadurch gekennzeichnet, dass** die Hydraulikzylinder (61, 62) zwischen einer Verlängerung des Fahrgestells (50; 50', 50") und einer der Kippeinrichtungen (56; 155) angeordnet sind.

4. Traktor nach Anspruch 3, **dadurch gekennzeichnet, dass** die Hydraulikzylinder (61, 62) zwischen einer oberen Verlängerung (60) des Fahrgestells (50; 50', 50") und einer Gelenkanordnung (65, 66) einer unteren Kippeinrichtung (56) angeordnet sind.

5. Traktor nach Anspruch 3, **dadurch gekennzeichnet, dass** die Hydraulikzylinder (61, 62) zwischen einer Verlängerung (74, 163) einer oberen Kippeinrichtung (155) und einem unteren Abschnitt des Fahrgestells (50; 50', 50") angeordnet sind.

6. Traktor nach einem der vorhergehenden Ansprüche, **dadurch gekennzeichnet, dass** das Fahrgestell (50) starr ist und einen starren Holm umfasst, der sich entlang einer Längsachse (a) entwickelt, die horizontal angeordnet ist.

7. Traktor nach einem der Ansprüche 1 bis 5, **dadurch gekennzeichnet, dass** das Fahrgestell in zwei Abschnitten (50') und (50") mit zentraler Gelenkverbindung (73) vorliegt.

## Revendications

1. Tracteur isodiamétrique avec un entretien minimal, comprenant un châssis (50 ; 50', 50") portant un essieu avant (52) et un essieu arrière (52') pour des paires de roues avant (51) et de roues arrière (51'), deux roues avant (51) étant des roues motrices et étant actionnées par un moteur (71) avec l'interposition d'un différentiel, et des moyens de transmission pour transmettre un mouvement du moteur (71) aux roues (51) étant entièrement contenus dans le châssis, chaque roue (51) de l'essieu avant (52) étant également reliée au châssis (50 ; 50', 50") et/ou à un carter de différentiel par un groupe cinématique articulé respectif, ledit moteur (71) étant fixé en porte-à-faux à une extrémité avant du châssis (50 ; 50', 50"), **caractérisé par le fait que** chaque groupe cinématique articulé de chaque roue (51) de l'essieu avant (52) est associé à un vérin hydraulique (61, 62), associé au moyen d'un axe (63, 64 ; 158) à une partie dudit châssis (50 ; 50', 50") et, à l'autre extrémité, à une partie (56 ; 155) dudit groupe cinématique articulé, chaque vérin hydraulique (61, 62) comprenant deux chambres ayant un volume variable, à l'opposé d'un piston intermédiaire (69, 70), une chambre supérieure d'un vérin (61) étant reliée (en 67) à une chambre supérieure de l'autre vérin (62) et une chambre inférieure d'un vérin (61) étant reliée (en 68) à une chambre inférieure de l'autre vérin (62), ledit groupe cinématique articulé comprenant un culbuteur supérieur (55 ; 155) et un culbuteur inférieur (56 ; 156) positionnés entre ledit châssis (50 ; 50") et chaque support (54) de ladite roue avant (51).

2. Tracteur selon la revendication 1, **caractérisé par le fait que** chaque vérin hydraulique (61, 62) est positionné avec l'axe sur un plan sensiblement vertical.

3. Tracteur selon la revendication 1, **caractérisé par le fait que** lesdits vérins hydrauliques (61, 62) sont positionnés entre une extension dudit châssis (50 ; 50', 50") et l'un desdits culbuteurs (56 ; 155).

4. Tracteur selon la revendication 3, **caractérisé par le fait que** lesdits vérins hydrauliques (61, 62) sont positionnés entre une extension supérieure (60) dudit châssis (50 ; 50', 50") et une articulation (65, 66) d'un culbuteur inférieur (56).

5. Tracteur selon la revendication 3, **caractérisé par le fait que** lesdits vérins hydrauliques (61, 62) sont positionnés entre une extension (74, 163) d'un culbuteur supérieur (155) et une partie inférieure dudit châssis (50 ; 50', 50").

6. Tracteur selon une ou plusieurs des revendications précédentes, **caractérisé par le fait que** ledit châssis est rigide (50) et comprend un longeron rigide qui s'étend le long d'un axe longitudinal (a) positionné horizontalement.

7. Tracteur selon une ou plusieurs des revendications précédentes, **caractérisé par le fait que** ledit châssis est en deux parties (50') et (50") avec une articulation centrale (73).
